# EUROPEAN PATENT APPLICATION

(11) **EP 4 442 991 A1**
(43) Date of publication of application: **09.10.2024**
(21) Application number: 23166685.0
(22) Date of filing: 05.04.2023
(51) Int. Cl.: F03D 7/02

(54) **METHOD OF CONTROLLING A WIND TURBINE**

(71) Applicant: Siemens Gamesa Renewable Energy A/S, 7330 Brande (DK)
(72) Inventor: Enevoldsen, Peder Bay, 7100 Vejle (DK); Gonzalez, Alejandro Gomez, 8000 Aarhus (DK); Poulsen, Steffen Frydendal, 7120 Vejle (DK)
(74) Representative: SGRE-Association

(57) **Abstract**

The invention describes a method of controlling a wind turbine (1) with a rotor comprising a plurality of rotor blades (10), each equipped with an active flap arrangement (2) at its trailing edge (10_{TE}), which method comprises the steps of determining a set (S₁₀) of rotor blade flutter conditions, wherein each rotor blade flutter condition comprises a combination of rotor blade parameters (ω, θ) at which rotor blade flutter would develop; and, during operation of the wind turbine (1), monitoring the rotor blade parameters (ω, θ) and, when the parameters (ω, θ) of a rotor blade (10) approach a rotor blade flutter condition, controlling the active flap arrangement (2) of that rotor blade (10) to increase aerodynamic damping of the rotor blade (10). The invention further describes a wind turbine (1) comprising a means (12, 14) of controlling the active flap arrangements (2) using the inventive method.

## Description

### Background

The rotor diameter of a present-day wind turbine can be in excess of 165 m, i.e. the rotor blades have a length of approximately 80 m or more. Such a long rotor blade is generally slender and quite flexible. A wind turbine with a large rotor diameter can have a relatively low nominal rotational velocity compared to wind turbines with smaller rotors, since the rotor blade tip speed should not exceed certain design limits.

However, the blade tip velocity of a long rotor blade can be very high. Present-day wind turbines may have tip velocities in the range of 80 to 90 m/s, some may even exceed a tip velocity of 100 m/s. For some wind turbine configurations it is favourable to raise the allowable rotor blade tip speed as this decreases the required rotor torque for a given power level. However, high tip speeds come with challenges such as increased rotor noise, increased leading-edge erosion, and an increased likelihood of unstable rotor blade behaviour. At high wind speeds and correspondingly high rotor speeds, unfavourable aeroelastic behaviour such as spanwise and edgewise oscillations can develop in various susceptible regions of a long rotor blade. In the outboard or tip region of the rotor blade, flutter can develop under certain conditions, for example when the aerodynamic rotor is in an overspeed situation (turning at a speed higher than its nominal speed).

In the context of a wind turbine rotor blade, the terms "flutter", "flutter instability" and "flutter condition" shall be understood as an unstable vibration condition, and can be used to describe a self-sustained vibration, or an unstable vibration with increasing amplitude. Flutter with one or mode vibration modes can develop in the airfoil of a wind turbine rotor blade under various conditions, and can lead to structural failure of the rotor blade. Typical flutter vibration modes of wind turbine rotor blade airfoils can exhibit coupling of an edgewise mode and a torsional mode; coupling of a flapwise mode and a torsional mode; coupling of a flapwise mode and an edgewise mode; a whirling mode. The nature of the modes that can be excited during a flutter instability depends primarily on the design of that rotor blade, and in the following, the term "flutter" shall be understood as an unstable vibration arising from any number of modes (a single mode or two or more coupled modes) and with any type of amplitude (stable or increasing).

Since it is important to avoid situations which encourage the development of flutter modes, the rotational speed of the aerodynamic rotor of a wind turbine is generally kept below a certain safety limit. Particularly in the case of long and very flexible rotor blades, the "flutter safety margin" has become smaller, i.e. safe operating speeds for a large rotor are not much lower than critical operating speeds at which rotor blade flutter is likely to develop. The reason for this is that long and slender rotor blades may exhibit flutter instability at rotor speeds that are close to the allowable overspeed limits of the turbine. As a result, modern large-rotor wind turbines operate closer to the limits of flutter stability in comparison with older wind turbines.

Because of the thin and flexible construction in the outboard region of a long rotor blade, undamped flutter instabilities can quickly result in serious damage. Because flutter instabilities can develop relatively quickly, it is important to avoid such situations and to ensure that the wind turbine's operational envelope has sufficient safety margin with respect to the allowable flutter limits. An unchecked flutter instability would likely result in significant structural damage to the rotor blades and potentially also to the rest of the wind turbine structure.

In one approach, the development of flutter can be discouraged by adding more material in the rotor blade outboard end with the aim of increasing the level of torsional stiffness, or by altering the relative positions of one or more of the shear centre, aerodynamic centre, and mass centre of the rotor blade. However, these design measures are costly to implement and have the undesirable effect of increasing the rotor blade weight.

In an alternative approach, the development of rotor blade vibration can be detected (e.g. using sensors such as strain gauges) and evaluated, and the wind turbine controller can respond accordingly. For example, the wind turbine controller can respond by decreasing the rotor blade pitch angles and/or by actuating a suitable rotor blade add-on to damp the vibrations. An example of such an add-on is an active flap arrangement mounted to the trailing edge of a rotor blade in its outboard region, and which can be actuated to alter the aerodynamic loading in that airfoil region. Such an active flap arrangement can be tilted or turned towards the pressure side to increase lift in that airfoil region, or in the opposite direction to decrease lift.

The effectiveness of aerodynamic damping using such an active device is to a large extent dependent on the operational state of the wind turbine and various non-linear relationships between different rotor blade vibration modes. A significant drawback of the known approach is that remedial measures are made after development of a vibrational mode such as flutter so that, by the time the vibrational mode has been damped as described above, the material of the rotor blade has been stressed. Over time, such damage can accumulate and can significantly shorten the lifetime of the rotor blade.

It is therefore an object of the invention to overcome the problems outlines above.

This object is achieved by the claimed method of controlling a wind turbine and by the claimed wind turbine.

### Description

The claimed method is suitable for a wind turbine such as a horizontal-axis wind turbine, which has an aerodynamic rotor comprising long rotor blades of the type described above. The diameter of the aerodynamic rotor can be assumed to be relatively large, e.g. at least 130 m, and that the nominal rotational velocity (the "rated speed") of the aerodynamic rotor is in the order of 5 to 14 rpm.

It shall be assumed that each rotor blade is equipped with an active flap arrangement at its trailing edge. An active flap arrangement of a rotor blade may comprise one or more individually controllable active flaps, and these may be referred to collectively in the following as "the active flap" of a rotor blade.

According to the invention, the method comprises a step of determining a set of rotor blade flutter conditions, wherein each rotor blade flutter condition comprises a combination of rotor blade parameters at which rotor blade flutter would develop. Then, during operation of the wind turbine, the inventive method comprises steps of monitoring the rotor blade parameters and, when the parameters of a rotor blade are observed to approach a rotor blade flutter condition, controlling the active flap arrangement of that rotor blade to increase aerodynamic damping of the rotor blade. This measure has the effect of pre-empting or preventing the development of rotor blade flutter.

An advantage of the inventive method is that the wind turbine can be operated safely in conditions that would otherwise lead to rotor blade flutter and physical damage to the rotor blade. The inventive method allows the wind turbine to operate at conditions outside of a usual "safe" zone, i.e. at higher wind speed and rpm conditions, so that the wind turbine can continue to generate favourably high levels of output power without needing to be curtailed in order to avoid rotor blade flutter, and/or without having to make unfavourable structural modifications resulting in higher rotor blade mass.

As explained above, the inventive wind turbine comprises an aerodynamic rotor comprising a plurality of rotor blades, and an active flap arrangement arranged at the trailing edge of each rotor blade. Each active flap arrangement has a range of motion between lift-decreasing positions in which an active flap directs airflow towards the suction side of the rotor blade, and lift-increasing positions in which an active flap directs airflow towards the pressure side of the rotor blade. The inventive wind turbine comprises a means of controlling the active flap arrangements using the claimed method.

Particularly advantageous embodiments and features of the invention are given by the dependent claims, as revealed in the following description. Features of different claim categories may be combined as appropriate to give further embodiments not described herein.

In the following, it may be assumed that the wind turbine has a wind turbine controller configured to control various components of the wind turbine, for example the wind turbine controller may be assumed to issue pitch references to the pitch drives of the rotor blades whenever the orientation of the rotor blades needs to be adjusted. The wind turbine controller may also be assumed to be capable of issuing control signals to the active flap arrangements of the rotor blades. As the skilled person will be aware, pitch references and flap control can be done individually for each of the rotor blades and/or collectively for all rotor blades.

The expressions "rotor rotational velocity" and "rotor speed" shall be understood to be synonyms and may be used interchangeably herein.

The rotor blades of a wind turbine can be equipped with any suitable kind of active flap, of which there are many possible realizations. In the following, without restricting the invention in any way, it may be assumed that the active flap(s) of an active flap arrangement can be turned through a working range in response to a control signal. Furthermore, it may be assumed that an active flap comprises a suitable flap turning means (for example a mechanical hinge, an elastomer hinge, an actuator actuated with pneumatic or hydraulic pressure, a piezo-electric material, etc.) adapted to turn the active flap to a specific position in response to a control signal. An active flap of the type discussed herein is preferably arranged in the outboard region of a rotor blade, for example in the outer 30% of the rotor blade length.

The set of flutter conditions can be determined from empirical measurements obtained for one or more operational wind turbines, for example by equipping the rotor blades with a means of detecting flutter, and operating the wind turbine in various modes until flutter develops. Because such "flutter tests" may compromise the structural integrity of the wind turbine, the conditions leading to flutter can also be calculated numerically by means of turbine aeroelastic simulations. The relevant rotor blade parameters are recorded for each instance of flutter. However, as explained above, any development of flutter can lead to undesirable strain of the rotor blade material. Therefore, in a preferred embodiment of the invention, the set of flutter conditions is determined during a design stage of a rotor blade. Preferably, this is done by using one or more suitable models to simulate the behaviours of the rotor blade at various combinations of operating parameters. For example, the model of a rotor blade can allow its behaviour to be simulated over a wide range of combinations of rotor speed, pitch angle, power, etc. and can take into account other factors such as wind speed, turbulence, fatigue damage, etc. In this way, a rotor blade for a certain wind turbine type can be designed such that flutter conditions are avoided. Alternatively or in addition, a set of flutter conditions can be determined on the basis of empirical data collected after manufacture of a rotor blade, for example by observing the behaviour of the rotor blade when subject to loading by a suitable test rig and/or by observing the behaviour of that type of rotor blade already in use in one or more wind turbine installations.

Rotor blade flutter can develop as a result of various influences. It has been observed that the onset of rotor blade flutter depends to a large extent on rotor speed and pitch angle, and may also be encouraged to develop by rotor blades with low torsional stiffness, or rotor blades with an unfavourable combination of vibration modes which can lead to negative aerodynamic damping. Therefore, in a particularly preferred embodiment of the invention, the rotor blade parameters comprise primarily pitch angle and rotor rotational velocity, but may also include other operational conditions of the wind turbine as well as atmospheric conditions such as wind speed, turbulence, wind shear, etc.

A wind turbine rotor may have a rated or nominal rotational velocity, determined largely by the diameter of the aerodynamic rotor and the design conditions limiting the allowable tip speed of the rotor blades. It can be assumed that oscillations will not develop in the rotor blades as long as this rated speed and/or the allowable overspeed limit ("omega overspeed") of the rotor are not exceeded. Generally, this rated speed and/or the allowable overspeed limit already provide for a safety margin in the order of a few rpm, or a percentage value of the nominal rpm. Preferably, the rotor blade flutter conditions are determined for rotational velocities exceeding the rotor's nominal rotational velocity. Equally, the rotor blade flutter conditions can be determined for the rotor's highest allowable overspeed velocity. With this information, the inventive method can be used to identify rotor blade parameters with which the wind turbine can be operated safely above its rated rotor speed and allowable overspeed limit, i.e. without risk of developing flutter.

With the predetermined knowledge of the flutter conditions for a specific type of rotor blade, and with knowledge of the rotor blade's pitch positions, the wind turbine controller can avoid any condition in which flutter might be likely to develop. For example, with the rotor blade(s) at a certain pitch position, the rotor speed may change (gradually increasing or decreasing) and the previously stable combination of rotor speed and pitch angle may start to approach a flutter condition (generally the case when rotor speed is increased). The inventive method monitors these parameters and responds by controlling the active flap to increase aerodynamic damping of the rotor blade so that the unchanged combination of rotor speed and pitch angle remains stable.

In the context of the invention, the 0° pitch position (or zero pitch position) of a rotor blade is the position in which the chord plane of the outboard airfoil region can be regarded as essentially parallel to the rotor plane, with the suction side of the rotor blade facing in the downwind direction, and the pressure side facing in the upwind direction. In its 90° pitch position, used for example when the wind turbine is at standstill, the rotor blade is turned about its long axis so that plane of the outboard airfoil region is essentially perpendicular to the rotor plane (when the rotor blade is pointing downwards at "six o'clock", its leading edge faces away from the tower).

In a preferred embodiment of the invention, the step of controlling the active flap of a rotor blade comprises moving the active flap to decrease lift during operating conditions with small rotor blade pitch angles. For a long and slender wind turbine rotor blade of the type described above, a "small" rotor blade pitch angle shall be understood to lie in the range 0° ± 4°, i.e. to within a few degrees of the zero pitch position, seeking an optimal aerodynamic performance. Such situations may occur when the wind turbine is operating at low wind speeds, or at wind speeds near the rated wind speed, and simultaneously with the occurrence of a rotor overspeed.

In a further preferred embodiment of the invention, the step of controlling the active flap of a rotor blade comprises moving the active flap to increase lift during operating conditions with large rotor blade pitch angles. For a long and slender wind turbine rotor blade of the type described above, a "large" pitch angle shall be understood to be in the range of 10° to 30°, preferably at least 20°, in order to maintain the rated speed and the rated power of the turbine. This is an operational range typical of high wind speeds (for example 15 m/s or more).

At intermediate speeds, for example in a range between 10 m/s and 15 m/s, the wind turbine controller may switch between the two regimes described above.

A wind turbine with a large rotor (e.g. 160 m or more) can have a rated or nominal rotor speed in the order of about 7 rpm - 10 rpm. At nominal rotor speeds, no unfavourable aeroelastic behaviour should occur. The same is true for rotor speeds below the highest allowable overspeed limit of the wind turbine. Effectively, the inventive method allows a wind turbine to be operated safely above its rated rotor speed without any risk of flutter developing in the outboard tip regions of the rotor blades, or to increase the safety margin between nominal speed of the wind turbine and flutter speed, or to design rotor blades with lower requirements for torsional stiffness (i.e. lower rotor blade mass). The increase in safety margin between the nominal rotor speed and the rotor speed at which flutter occurs allows the wind turbine to operate in a more safe manner, and/or allows the designer to design a lighter rotor blade with the same safety rotor speed margins.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine;
Figure 2 and Figure 3 illustrate relationships between the onset of flutter and rotor blade parameters;
Figure 4 shows an exemplary active flap mounted to a rotor blade as shown in Figure 1;
Figure 5 and Figure 6 show flap positions for exemplary situations;
Figure 7 shows an exemplary block diagram to illustrate the inventive method.

In the diagrams, like numbers refer to like objects throughout. Objects in the diagrams are not necessarily drawn to scale.

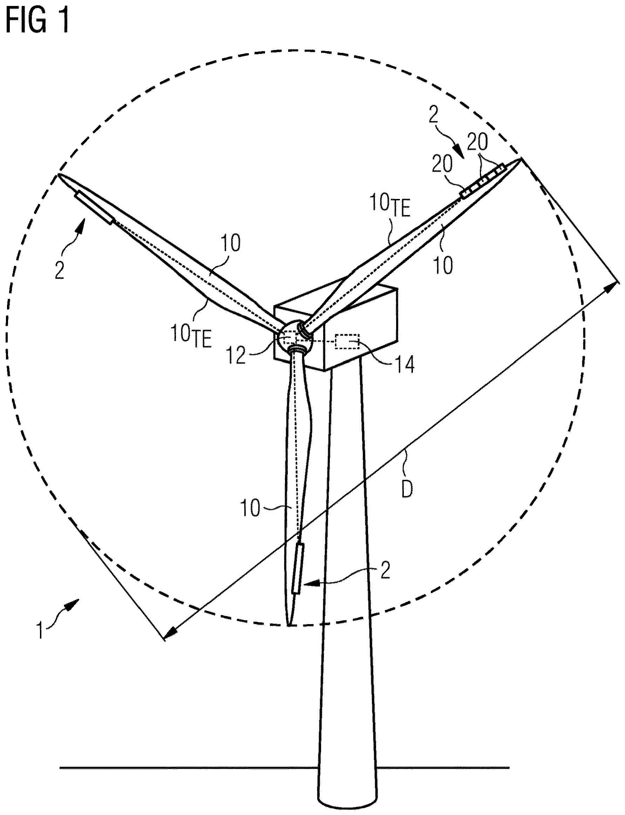

Figure 1 shows a wind turbine 1 with a large rotor diameter D. Here, the rotor blades 10 can have a length in excess of 80 m. Each rotor blade 10 is equipped with an active flap arrangement 2 comprising one or more active flaps 20 mounted at the trailing edge 10_{TE} of the outboard region. In this exemplary embodiment, an active flap arrangement 2 is mounted within the outer 30% or 40% of the rotor blade's length. The active flap arrangements 2 can have actuators that are controlled individually and/or collectively by an actuator controller 12 arranged in the hub, for example. This in turn can receive control commands from a wind turbine controller 14, indicated here schematically.

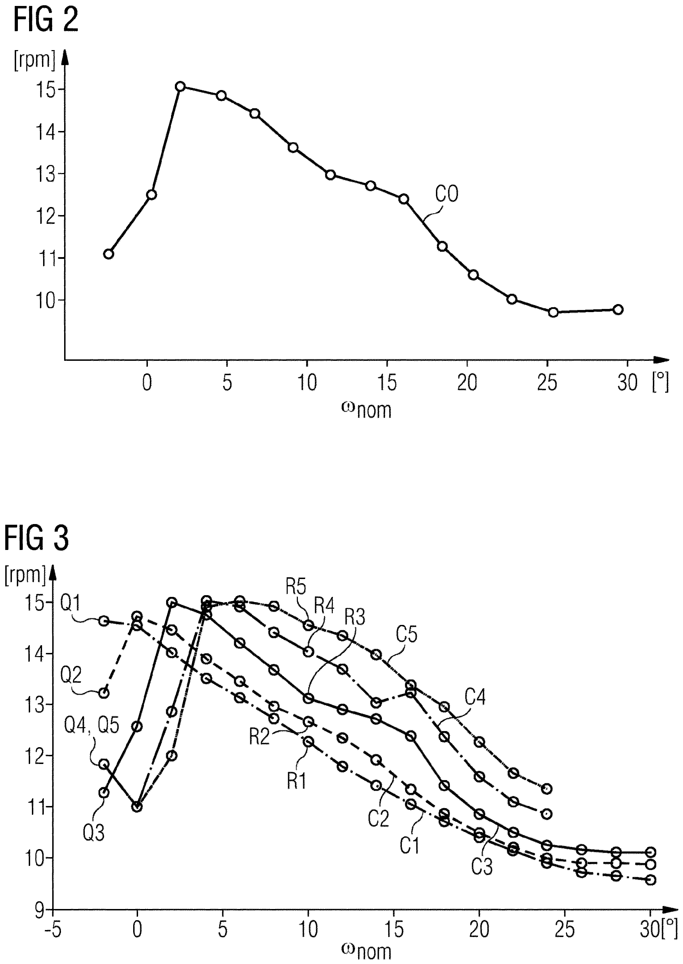

Figure 2 is an exemplary graph to illustrate the relationship between the onset of flutter and certain rotor blade parameters for a specific rotor blade design. Here, pitch angle [°] is indicated along the X-axis and rotational velocity [rpm] of the rotor blades (or aerodynamic rotor) is indicated along the Y-axis. The graph shows a set of points along a curve C0. Each point is the combination of pitch angle and rotor speed at which flutter will develop for that rotor blade. It shall be understood that the rotor blade in this case is not equipped with an active flap, and this curve is regarded as a reference curve C0 for that rotor blade design. The data can result from empirical measurements using operational wind turbines, for example or from detailed aeroelastic simulations.

Figure 3 shows a further exemplary set of curves C1 - C5 obtained in the same manner for the same rotor blade design. In this case, it shall be understood that the rotor blade is equipped with an active flap arrangement. Each curve C1 - C5 comprises a set of points. Again, each point is the combination of pitch angle and rotor speed at which flutter will develop for that rotor blade. Here, each curve C1 - C5 is also associated with a specific position of the active flap: for example curve C1 comprises points collected for an active flap in its "minimum" position; curve C5 comprises points collected for an active flap position in its "maximum" position; the remaining curves C2 - C4 comprise points collected for three intermediate active flap positions. In this exemplary embodiment, the "minimum" position of the active flap is a position in which the active flap deflects the airflow towards the space containing the suction side of the airfoil; the "maximum" position of the active flap is its steepest working position.

The invention is based on the insight at an active flap can be used to prevent or pre-empt development of rotor blade flutter. The diagram shows that the development of flutter at a certain rotor speed depends on the pitch angle (which has been set by the wind turbine controller in response to the current operating conditions). For example, at a pitch angle of 10° and with the active flap in its minimum position, flutter will develop when the rotor blade turns at about 12 rpm (point R1 on curve C1); at the same pitch angle and with the active flap in its maximum position, flutter will develop when the rotor blade turns at about 14 rpm (point R5 on curve C5). The principle of the inventive method is to recognize when the rotor blade parameters approach a critical flutter condition (e.g. a point on any of these curves C1 - C5) and to actuate the active flap to shift the rotor blade flutter limit towards a "higher" curve, thereby allowing the wind turbine to operate at the same favourable combination of rpm and pitch angle without risk of flutter developing in the rotor blade tip regions.

For example, to move away from the critical point R1 on curve C1 when turning at 12 rpm and pitched to 10°, the active flap(s) of a rotor blade can be actuated to increase lift, thereby raising the flutter limit. Here, moving the active flap to its second working position (curve C2) raises the flutter limit of that rotor blade to point R2 on curve C2, and the rotor blade can continue to rotate at 12 rpm and the same pitch angle with a low risk of flutter developing. It should be understood, that if flutter occurs, it is usually related to situations in which the wind turbine is experiencing an overspeed situation. In such situations, the wind turbine controller will try to increase the pitch angle of the rotor blades in order to stop the wind turbine. Nevertheless, it is important to guarantee that there is sufficient safety margin between the allowable rotor overspeed limits and the rotor speed at which flutter may occur. Alternatively, the active flap can be moved towards a more extreme working position, for example to move the flutter limit to point R4 on curve C4 or point R5 on curve C5. This would allow the rotor speed to be increased to 14 rpm or more, while maintaining the same pitch angle, without risk of flutter developing in the rotor blade tip regions.

In another example, in moderate wind conditions the operating parameters may comprise a relatively small pitch angle combined with a rotor speed at or above nominal speed. As indicated in curves C3 - C5, the flutter limit is quite low for the more extreme active flap positions when the pitch angle is near 0°. With the inventive method, a controller evaluates these parameters to recognize the imminence of a critical flutter condition (e.g. points Q3 - Q5 at a pitch angle of -3°) and to actuate the active flap to shift the rotor blade flutter limit towards point Q2 on curve C2 or even further towards point Q1 on curve C1.

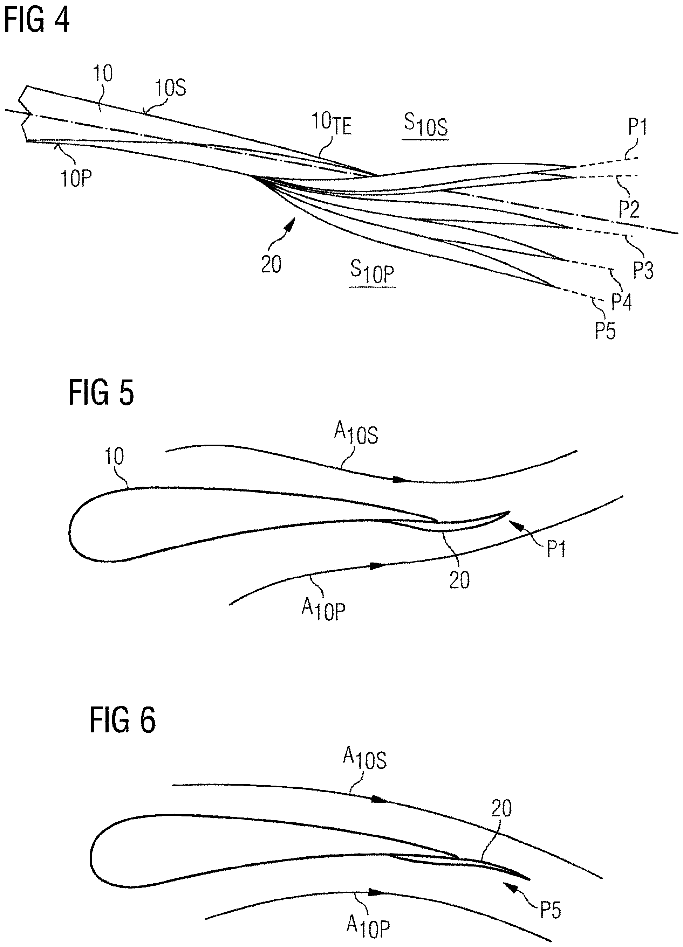

Figure 4 shows an exemplary active flap 20 mounted to the trailing edge 10_{TE} of a rotor blade as shown in Figure 1. An active flap arrangement 2 can comprise several such active flaps 20 arranged in a linear formation along the trailing edge 10_{TE} of the rotor blade 10. The chord plane of the airfoil divides the surrounding space into a first space S_{10S} containing the airfoil suction surface 10S, and a second space S_{10P} containing the airfoil pressure side 20P.

Here, the active flap 20 can be moved between a minimum position P1 and a maximum position P5 as indicated by the dotted lines. The minimum position P1 can be regarded as a "neutral position" in which lift force on the rotor blade is reduced. In this position, indicated in Figure 5, the active flap guides and combines the suction-side airflow A_{10S} (the airflow that passed over the suction surface 10S of the airfoil) and the pressure-side airflow A_{10P} (the airflow that passed over the pressure surface 10P of the airfoil) to deflect upward at the trailing edge 10_{TE}, in the direction of the first space S_{10S}. The effect of this position of the active flap 20 is to reduce the lift force acting on the airfoil 10.

The maximum position P5 of the active flap 20 can be regarded as its largest working position in which lift force on the rotor blade is maximized, as illustrated in Figure 6. The effect of this position of the active flap 20 is to increase the lift force acting on the airfoil 10.

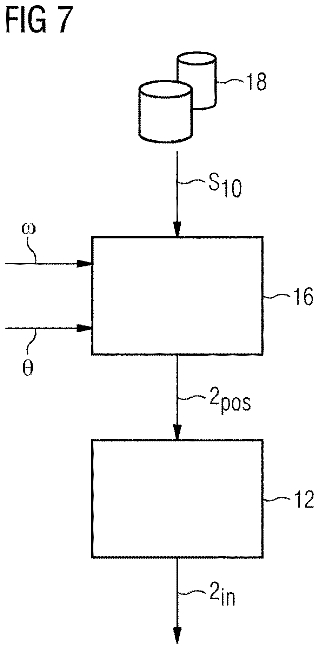

Figure 7 shows an exemplary block diagram with an evaluation module 16, which can be part of the wind turbine controller or which can be realised in any other suitable control component of a wind turbine. The evaluation module 16 receives a set S₁₀ of rotor blade flutter conditions, which can have been obtained in a previous simulation or calibration procedure. The set S₁₀ can, for example, comprise a set of points such as those shown in curves C1 - C5 of Figure 3, wherein each set of seventeen points for the five flap positions comprises a value of rotor speed and a value of pitch angle. The evaluation module 16 also receives - at regular intervals - the current rotor speed ω and the current pitch angle θ for each rotor blade. With this information, the evaluation module 16 can determine whether these parameters are "safe" or whether they are approaching a flutter condition. If the evaluation module 16 determines that the combination of rotor speed and pitch angle is becoming critical, it can respond by issuing a control signal 2pos to the actuator controller 12 shown in Figure 1, indicating the appropriate flap position P1 - P5, and the actuator controller 12 can in turn issue appropriate control signals to the actuators of the active flap arrangements. As mentioned above, the active flaps of an active flap arrangement can be controlled individually and/or collectively; equally, the active flap arrangements of the rotor blades can be controlled individually and/or collectively.

Although the present invention has been disclosed in the form of preferred embodiments and variations thereon, it will be understood that numerous additional modifications and variations could be made thereto without departing from the scope of the invention. For example, control signals may be issued from a centralized controller of the wind turbine when this is operational and undergoing an overspeed situation, in order to pre-empt the development of flutter. Equally, control signals may be issued from a safety system that is designed to function even in a situation in which the centralized wind turbine controller is unavailable or malfunctioning.

For the sake of clarity, it is to be understood that the use of "a" or "an" throughout this application does not exclude a plurality, and "comprising" does not exclude other steps or elements.

## Claims

1. A method of controlling a wind turbine (1) with a rotor comprising a plurality of rotor blades (10), each equipped with an active flap arrangement (2) at its trailing edge (10_{TE}), which method comprises the steps of
- determining a set (S₁₀) of rotor blade flutter conditions, wherein each rotor blade flutter condition comprises a combination of rotor blade parameters (ω, θ) at which rotor blade flutter would develop;
and, during operation of the wind turbine (1),
- monitoring the rotor blade parameters (ω, θ) and,
- when the parameters (ω, θ) of a rotor blade (10) approach a rotor blade flutter condition, controlling the active flap arrangement (2) of that rotor blade (10) to increase aerodynamic damping of the rotor blade (10).

2. A method according to the preceding claim, wherein the set (S₁₀) of flutter conditions is determined on the basis of data collected during a design stage of a rotor blade (10) and/or on the basis of empirical data collected after manufacture of a rotor blade (10).

3. A method according to any of the preceding claims, wherein the rotor blade parameters comprise pitch angle (θ) and/or rotor rotational velocity (ω).

4. A method according to any of the preceding claims, wherein the set (S₁₀) of rotor blade flutter conditions is determined for rotational velocities greater than the rotor's nominal rotational velocity (ωₙₒₘ) and/or the rotor's highest allowable overspeed velocity.

5. A method according to any of the preceding claims, wherein the set (S₁₀) of rotor blade flutter conditions is determined for rotational velocities that exceed the rotor's nominal rotational velocity (ωₙₒₘ) or highest allowable overspeed velocity by at least 3%.

6. A method according to any of the preceding claims, the step of controlling the active flap arrangement (2) of a rotor blade (10) comprises actuating the active flap arrangement (2) to decrease lift during operating conditions with small rotor blade pitch angles (θ).

7. A method according to the preceding claim, wherein a small rotor blade pitch angle (θ) is in the range 0° ± 4°.

8. A method according to any of the preceding claims, the step of controlling the active flap arrangement (2) of a rotor blade (10) comprises actuating the active flap arrangement (2) to increase lift during operating conditions with large rotor blade pitch angles (θ).

9. A method according to the preceding claim, wherein a large pitch angle (θ) is at least 15°.

10. A wind turbine (1) comprising
- an aerodynamic rotor comprising a plurality of rotor blades (10) mounted to a hub;
- an active flap arrangement (2) arranged at the trailing edge (10_{TE}) of each rotor blade (10), wherein each active flap arrangement (2) has a range of motion between lift-decreasing positions (P1, P2) in which the active flap arrangement (2) directs airflow towards the suction side (S_{10S}) of the rotor blade (10), and lift-increasing positions (P3, P4, P5) in which the active flap arrangement (2) directs airflow (A_{10S}, A_{10P}) towards the pressure side (S_{10P}) of the rotor blade (10);
- a means (12, 14) of controlling the active flap arrangements (2) using the method according to any of claims 1 to 9.

11. A wind turbine according to the preceding claim, wherein an active flap arrangement (2) comprises a flap turning means adapted to turn the active flap arrangement (2) through its range of positions (P1 - P5).

12. A wind turbine according to any of claims 10 or 11, wherein the active flap arrangements (2) of the rotor blades (10) are controlled individually and/or collectively.

13. A wind turbine according to any of claims 10 to 12, wherein the active flap arrangements (2) of the rotor blades (10) are controlled to raise the flutter limit by at least 5% of the rotor's nominal rotational velocity (ωₙₒₘ) and/or highest allowable overspeed velocity.

14. A wind turbine according to any of claims 10 to 13, wherein the diameter (D) of the aerodynamic rotor is at least 130 m.

15. A wind turbine according to any of claims 10 to 14, wherein an active flap arrangement (2) is arranged in the outboard region of a rotor blade (10).
